# EUROPÄISCHE PATENTANMELDUNG

(11) **EP 2 824 408 A1**
(43) Veröffentlichungstag der Anmeldung: **14.01.2015**
(21) Anmeldenummer: 13176256.9
(22) Anmeldetag: 12.07.2013
(51) Int. Cl.: F27B 3/08, F27B 3/28, F27D 11/10, F27D 19/00

(54) **Verfahren zur Steuerung- oder Regelung eines Elektrolichtbogenofens**

(71) Anmelder: Siemens Aktiengesellschaft, 80333 München (DE)
(72) Erfinder: Krassnig, Hans-Joerg, 4020 Linz (AT); Matschullat, Thomas, 90542 Eckental (DE)

(57) **Zusammenfassung**

Die Erfindung betrifft ein Verfahren zur Steuerung- oder Regelung eines Elektrolichtbogenofens (2) umfassend ein Ofengefäß (10) und zumindest eine an einem Elektrodentragarm (6a, 6b, 6c) angeordnete Elektrode (4a, 4b, 4c) zum Erzeugen eines Lichtbogens zum Schmelzen eines Schmelzguts (8), insbesondere eines Schrotts, im Ofengefäß (10), wobei Schwingungsfrequenzen an einer Wand (14) des Ofengefäßes (10) erfasst werden. Im Hinblick auf eine Steigerung der Effizienz im Betrieb des Elektrolichtbogenofens (2) wird zum Beginn eines Schmelzvorgangs eine Starthöhe des Elektrodentragarms (6a, 6b, 6c) und somit eine Startposition des Lichtbogens bestimmt, anschließend wird eine Positionsänderung des Elektrodentragarms (6a, 6b, 6c) in Bezug auf die Starthöhe erfasst wird und daraus wird eine Änderung der Lichtbogenposition berechnet. Die Lichtbogenposition wird für eine Steuerung oder Regelung des Energieeintrags in den Elektrolichtbogenofen (2) mit den erfassten Schwingungsfrequenzen korreliert.

## Beschreibung

Die Erfindung betrifft ein Verfahren zur Steuerung- oder Regelung eines Elektrolichtbogenofens umfassend ein Ofengefäß und zumindest eine an einem Elektrodentragarm angeordnete Elektrode zum Erzeugen eines Lichtbogens zum Schmelzen eines Schmelzguts, insbesondere eines Schrotts, im Ofengefäß, wobei Schwingungsfrequenzen an einer Wand des Ofengefäßes erfasst werden.

Die Erfindung betrifft weiterhin eine Signalverarbeitungseinrichtung für einen Elektrolichtbogenofen, einen maschinenlesbaren Programmcode, ein Speichermedium mit einem darauf gespeicherten maschinenlesbaren Programmcode sowie einen Elektrolichtbogenofen.

Beim Elektrodenlichtbogenofen werden heutzutage bereits Körperschallsensoren an den Wänden des Ofengefäßes angebracht, um auf den Zustand des Ofeninneren schließen zu können. Mittels der Körperschallsignale können z.B. Informationen über den Zustand oder die Bewegung des Schrottes im Ofen gewonnen werden, wobei aufgrund von diesen Informationen durch entsprechende Algorithmen Regelungsmaßnahmen eingeleitet werden.

Aus der EP 1 910 763 A1 ist beispielsweise ein Verfahren zur Bestimmung einer Zustandsgröße eines Elektrolichtbogenofens, insbesondere zur Bestimmung der Höhe der Schaumschlacke im Elektrolichtbogenofen bekannt. Hierbei wird die Energiezufuhr in den Elektrolichtbogenofen unter Zuhilfenahme mindestens eines elektrischen Sensors ermittelt und der Körperschall wird in Form von Schwingungen am Elektrolichtbogenofen gemessen. Die mindestens eine Zustandsgröße, insbesondere die Höhe der Schaumschlacke, wird mit Hilfe einer Übertragungsfunktion bestimmt, die durch Auswertung der gemessenen Schwingungen, d.h. des Körperschalls, und durch Auswertung von Messdaten des mindestens einen elektrischen Sensors ermittelt wird.

Die EP 2 549 833 A1 offenbart einen mit einer Wechselspannung betriebenen Lichtbogenofen, wobei ein an einer Wand des Lichtbogenofens auftretendes Körperschallsignal erfasst wird, aus dem ein die Flickereigenschaften des Lichtbogenofens charakterisierender Parameter berechnet wird. Anhand des berechneten Parameters wird zumindest eine Prozessgröße des Lichtbogenofens gesteuert.

In der EP 2 238 805 A1 ist ein Verfahren zur Ermittlung eines Strahlungsmaßes für eine auf eine Begrenzung des Lichtbogenofens treffende thermische Strahlung beschrieben. Hierbei wird ein Verfahren bereitgestellt, mit dem eine einen Betriebszustand einer Elektrode eines Lichtbogenofens charakterisierende Größe bestimmbar ist, indem ein der Elektrode zugeführter Elektrodenstrom erfasst wird, wobei KörperschallSchwingungen des Lichtbogenofens erfasst werden, wobei aus dem erfassten Elektrodenstrom ein einem Frequenzbereich des erfassten Elektrodenstroms zugeordnetes Stromauswertesignal ermittelt wird, wobei aus den erfassten Körperschall-Schwingungen ein einem Frequenzbereich der erfassten KörperschallSchwingungen zugeordnetes Schwingungsauswertesignal ermittelt wird, und wobei als Strahlungsmaß ein Quotient aus Schwingungsauswertesignal und Stromauswertesignal für wenigstens eine dem erfassten Elektrodenstrom und den erfassten Körperschall-Schwingungen gemeinsame Frequenz gebildet wird.

Und schließlich geht aus der EP 2 235 220 A2 ein Elektrolichtbogenofen hervor, bei dem ein einer Elektrode zur Ausbildung eines Lichtbogens zugeführter Elektrodenstrom erfasst wird, wobei aus dem erfassten Elektrodenstrom ein Effektivwertmaß des Elektrodenstroms ermittelt wird und aus dem erfassten Elektrodenstrom ein einem Frequenzbereich des erfassten Elektrodenstroms zugeordneter Stromanteil ermittelt wird. Hierbei wird als Stückigkeitsmaß ein Quotient aus Stromanteil und Effektivwertmaß gebildet. Dadurch kann ein Verfahren bereitgestellt werden, mit welchem eine Eigenschaft eines dem Elektrolichtbogenofen zugeführten Schmelzguts bestimmt werden kann.

Der Erfindung liegt die Aufgabe zugrunde, den Betrieb eines Elektrolichtbogenofens effizienter zu gestalten.

Die Aufgabe wird erfindungsgemäß gelöst durch ein Verfahren der eingangsgenannten Art, bei dem
- zum Beginn eines Schmelzvorgangs eine Starthöhe des Elektrodentragarms und somit eine Startposition des Lichtbogens bestimmt wird,
- eine Positionsänderung des Elektrodentragarms in Bezug auf die Starthöhe erfasst wird und daraus eine Änderung der Lichtbogenposition berechnet wird, und
- die Lichtbogenposition für eine Steuerung oder Regelung des Energieeintrags in den Elektrolichtbogenofen mit den erfassten Schwingungsfrequenzen korreliert wird.

In den bereits zahlreich am Elektrolichtbogenofen implementierten holistischen Prozessmodellen zur Modellierung der Schmelztemperatur und Kontrolle der Temperaturführung, werden üblicherweise unzählige Parameter berücksichtigt. Sämtliche Mengen- und Energieflüsse werden erfasst, um eine möglichst exakte Bilanzierung des Elektrolichtbogenofens zu ermöglichen. Bisher wurde die Position der Elektroden im Elektrolichtbogenofen jedoch nicht direkt berücksichtigt. Eine indirekte Berücksichtigung erfolgt derzeit über eine Korrekturfunktion mittels der bekannten eingestellten Spannungsstufen am Ofentransformator. Da jedoch die Position der Elektrodenspitze, die die Quelle für den Lichtbogenschall bildet, durch ihren Abstand zum jeweiligen Körperschallsensor einen gewissen Einfluss auf die Körperschallmessung hat, können leicht von der Realität abweichende Messsignale erzeugt werden.

Die Erfindung basiert somit auf der Überlegung, dass präzisere Aussagen über den im Ofengefäß ablaufenden Schmelzprozess getroffen werden, wenn neben den bekannten, lichtbogenofen- oder schmelzgutbezogenen Größen, die mit Hilfe einer Körperschallmessung der Schwingungsfrequenzen an der Wand des Ofengefäß ermittelt werden, für die Steuerung bzw. Regelung des Schmelzprozesses zusätzlich auch die Position des Lichtbogens im Ofengefäß herangezogen wird.

Beim erstmaligen Zünden des Lichtbogens bzw. der Lichtbögen, wenn mehrere Elektroden vorhanden sind, zum Einschmelzbeginn wird die Höhe des Elektrodentragarms erfasst und dient als Starthöhe für den sich absenkenden Elektrodentragarm während der Einbohrphase eines jeden Schrottkorbs. Hierbei wird die Position des Elektrodentragarms erfasst, da dies einfacher ist als direkt die Position des Lichtbogens im Ofengefäß zu ermitteln. Aus der Starthöhe des Elektrodentragarms wird die Startposition des Lichtbogens, der die Schallemissionsquelle für die Körperschallmessungen bildet, abgeleitet. Die sich im weiteren Schmelzverlauf ändernde Position des jeweiligen Lichtbogens kann nun über die Elektrodentragarmpositionsbestimmung ermittelt werden und ist jederzeit während des Schmelzvorganges bekannt.

Dank der Kombination der Lichtbogenpositionsbestimmung mit der Körperschallauswertung kann ein vollautomatischer, dynamischer Bohr- und Trafo-Setup zu Beginn des Schmelzprozesses (d.h. ca. im ersten Drittel des Schmelzprozesses) eingestellt werden, der im Vergleich zu dem bisher üblichen Betrieb basierend auf fixen, vorgegebenen Schmelzdiagrammen zu kürzeren Power-On-Zeiten führt.

Nach einer bevorzugten Variante wird aus der Änderung der Lichtbogenposition eine Elektrodeneinbohrgeschwindigkeit ermittelt. Die relative Einbohrgeschwindigkeit des jeweiligen Lichtbogens wird hierbei als neuer Indikator für die Prozessmodellierung verwendet. Die von Charge zu Charge unterschiedlichen Einbohrgeschwindigkeiten einer Elektrode lassen einen Rückschluss auf den Fortschritt des Schmelzprozesses zu. Wenn z.B. viel festes Schmelzgut im Ofengefäß vorhanden ist, wird eine relativ niedrige Einbohrgeschwindigkeit eingestellt.

Wenn wiederum das Schrottgut größtenteils flüssig ist, lässt sich der Elektrodentragarm bzw. der Lichtbogen schneller ins Schrottgut einbohren.

Gemäß einer weiteren bevorzugten Variante wird aus der Elektrodeneinbohrgeschwindigkeit ein Schmelzzustand des Schmelzguts bestimmt und bei der Steuerung oder Regelung des Energieeintrags in den Elektrolichtbogenofen berücksichtigt. Unter Schmelzgutzustand wird hierbei die mechanisch-physikalische Schmelzgutzusammensetzung verstanden, die durch das Verhältnis von festem zu flüssigem Schmelzgut bzw. durch die Schmelzgutdichte definierbar ist. Unterschiedliche Schmelzgutdichten und -zusammensetzungen bedingen unterschiedliche spezifische Einschmelzcharakteristika, auf welche nunmehr die Steuerung oder Regelung des Elektrolichtbogenofens angepasst wird. Dies ermöglicht eine Umgehung von schmelzgutbedingten Schwierigkeiten durch eine bessere Zuordnung zum Schrottzustand und dadurch genauere Regelvorgaben.

Zweckdienlicherweise wird der Schmelzgutzustand in einem Prozessmodell für eine Temperaturführung verwendet. Hierdurch erfolgt eine exakte Modellierung der Prozesstemperatur in einem holistischem Prozessmodell.

Bevorzugt wird die Elektrodentragarmposition mittels eines optischen, mechanischen oder magnetischen Verfahrens bestimmt. Als optisches Positionsermittlungsverfahren kommt z.B. eine Bestimmung der Position des Elektrodentragarms über eine Lasermessung in Frage. Alternativ wird die Position des Elektrodentragarms mittels eines Seilzugs oder einer Magnetbahn bestimmt.

Die Aufgabe wird weiterhin erfindungsgemäß gelöst durch eine Signalverarbeitungseinrichtung für einen Elektrolichtbogenofen, mit einem maschinenlesbaren Programmcode, welcher Steuerbefehle aufweist, die die Signalverarbeitungseinrichtung zur Durchführung des Verfahrens nach einer der obigen Ausführungen veranlassen.

Die Aufgabe wird zudem erfindungsgemäß gelöst durch einen maschinenlesbaren Programmcode für eine Signalverarbeitungseinrichtung für einen Elektrolichtbogenofen, wobei der Programmcode Steuerbefehle aufweist, die die Signalverarbeitungseinrichtung zur Durchführung des Verfahrens nach einer der obigen Ausführungen veranlassen.

Die Aufgabe wird außerdem erfindungsgemäß gelöst durch ein Speichermedium mit einem darauf gespeicherten maschinenlesbaren Programmcode.

Die Aufgabe wird schließlich erfindungsgemäß gelöst durch einen Elektrolichtbogenofen mit einem Ofengefäß und zumindest einer an einem Elektrodentragarm angeordneten Elektrode zum Erzeugen eines Lichtbogens zum Schmelzen eines Schmelzguts, insbesondere eines Schrotts, im Ofengefäß, mit Körperschallsensoren zur Erfassung von Körperschall an einer Wand des Ofengefäßes, mit einer Positionserfassungseinrichtung zum Erfassen der Position des Elektrodentragarms, und mit einer Signalverarbeitungseinrichtung, wobei die Positionserfassungseinrichtung und die Körperschallsensoren mit der Signalverarbeitungseinrichtung wirkverbunden sind.

Die in Bezug auf das Verfahren angeführten Vorteile und bevorzugten Ausgestaltungen lassen sich sinngemäß auch auf die Signalverarbeitungseinrichtung, den maschinenlesbaren Programmcode, das Speichermedium und den Elektrolichtbogenofen übertragen.

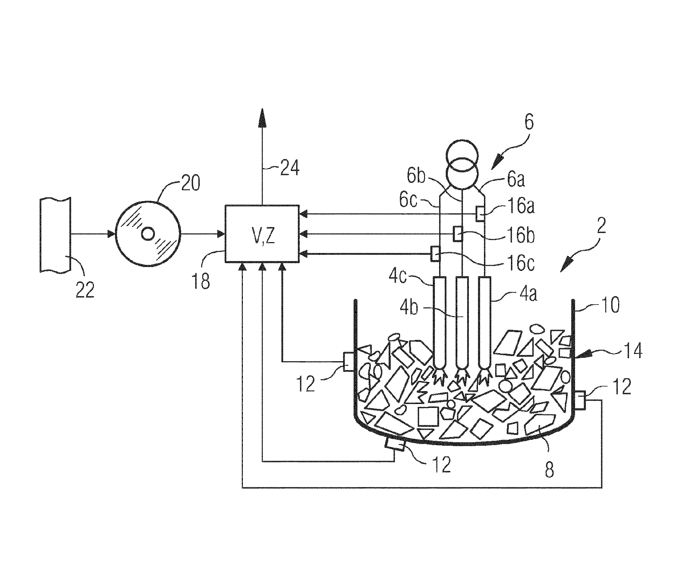

Ein Ausführungsbeispiel der Erfindung wird anhand einer Zeichnung näher erläutert. Hierin zeigt die einzige Figur schematisch einen Elektrolichtbogenofen 2 mit drei Elektroden 4a, 4b, 4c, die jeweils von einem Elektrodentragarm 6a, 6b, 6c getragen werden und über diesen verfahrbar sind.

Im Betrieb des Elektrolichtbogenofens 2 werden die Elektroden 4a, 4b, 4c in ein mit Schrott 8 als Schmelzgut gefülltes Ofengefäß 10 eingetaucht, so dass der Schrott 8 durch von den Elektroden 4a, 4b, 4c erzeugten Lichtbögen eingeschmolzen wird. Hierbei werden mittels Körperschallsensoren 12, die an einer Wand 14 des Ofengefäßes 10 angeordnet sind, Schallsignale aus dem Inneren des Ofengefäßes 10 gemessen, die in Form von Schwingungsfrequenzen erfasst und verarbeitet werden, um über dem Fachmann bereits benannte Auswerteverfahren Kenndaten über den im Elektrolichtbogenofen 2 ablaufenden Prozess zu gewinnen. Zusätzlich sind an den Elektrodentragarmen 6a, 6b, 6c Positionserfassungseinrichtungen 16a, 16b, 16c vorgesehen, mit deren Hilfe Veränderungen in der Position der Elektrodentragarme erfasst wird.

Zum Beginn des Schmelzvorgangs im Elektrolichtbogenofen 2, d.h. beim erstmaligen Zünden der Lichtbögen, wird eine Starthöhe des jeweiligen Elektrodentragarms 6a, 6b, 6c bestimmt. Wenn die Elektrodenlänge bekannt ist, kann somit auch die Anfangs- oder Startposition der Lichtbögen an den Elektrodenspitzen berechnet werden. Im weiteren Schmelzverlauf werden die Elektroden 4a, 4b, 4c immer tiefer in den Schrott eingebohrt, wobei mit Hilfe der Positionserfassungseinrichtungen 16a, 16b, 16c die Änderungen in der Position der Elektrodentragarme 6a, 6b, 6c und somit in der Position des jeweiligen Lichtbogens erfasst werden.

Die Messsignale der Positionserfassungseinrichtungen 16a, 16b, 16c werden genauso wie die Körperschallsignale der Körperschallsensoren 12 an eine Signalverarbeitungseinrichtung 18 weitergeleitet. Die Signalverarbeitungseinrichtung 18 umfasst ein Speichermedium 20 mit einem darauf gespeicherten maschinenlesbaren Programmcode 22 zur Ausgabe von Steuerbefehlen für den Betrieb des Elektrolichtbogenofens 2.

Durch die Kombination der kontinuierlichen Positionsbestimmung der Lichtbögen im Ofengefäß 10 mit der Körperschallauswertung wird ein Schmelzgut- oder Schrottzustand Z zuverlässig bestimmt. Je nach Schrottkondition zu Beginn des Schrotteinschmelzprozesses kann der Transformator auf höheren Leistungsstufen wesentlich früher, als durch fixe Einschmelzdiagramme, umgeschaltet werden.

Die Ermittlung des Schrottzustands Z erfolgt hierbei insbesondere über die Berechnung einer Elektrodeneinbohrgeschwindigkeit V. Die Elektrodeneinbohrgeschwindigkeit V wird aus der Positionsänderung der Elektrodentragarme 6a, 6b, 6c bzw. der Lichtbögen der Elektroden 4a, 4b, 4c über die gemessene Zeit abgeleitet. Die Elektrodeneinbohrgeschwindigkeit V liefert wertvolle Informationen über die Schrottdichte, den Aggregatzustand des Schrotts 8 sowie die Schrotttemperatur. Die Elektrodeneinbohrgeschwindigkeit V wird dabei mit den aus der Körperschallmessung gewonnenen Schwingungsfrequenzen korreliert um den Schrottzustand Z zuverlässig zu bestimmen.

Wenn genauere Informationen über den Schrottzustand Z während des Schmelzvorganges vorliegen, lässt sich das Einschmelzverhalten des Schrotts 8 realitätsnäher darstellen. Hierzu wird der Schrottzustand Z in einem Prozessmodell für eine Temperaturführung verwendet. Der Schrott- oder Schmelzgutzustand Z wird somit bei der Steuerung bzw. Regelung des elektrischen und chemischen Energieeintrags in den Elektrolichtbogenofen 2 berücksichtigt, was in der Figur durch den Pfeil 24 angedeutet ist.

## Patentansprüche

1. Verfahren zur Steuerung- oder Regelung eines Elektrolichtbogenofens (2) umfassend ein Ofengefäß (10) und zumindest eine an einem Elektrodentragarm (6a, 6b, 6c) angeordnete Elektrode (4a, 4b, 4c) zum Erzeugen eines Lichtbogens zum Schmelzen eines Schmelzguts (8), insbesondere eines Schrotts, im Ofengefäß (10), wobei Schwingungsfrequenzen an einer Wand (14) des Ofengefäßes (10) erfasst werden,
**dadurch gekennzeichnet, dass**
- zum Beginn eines Schmelzvorgangs eine Starthöhe des Elektrodentragarms (6a, 6b, 6c) und somit eine Startposition des Lichtbogens bestimmt wird,
- eine Positionsänderung des Elektrodentragarms (6a, 6b, 6c) in Bezug auf die Starthöhe erfasst wird und daraus eine Änderung der Lichtbogenposition berechnet wird, und
- die Lichtbogenposition für eine Steuerung oder Regelung des Energieeintrags in den Elektrolichtbogenofen (2) mit den erfassten Schwingungsfrequenzen korreliert wird.

2. Verfahren nach Anspruch 1,
**dadurch gekennzeichnet, dass** aus der Positionsänderung eine Elektrodeneinbohrgeschwindigkeit (V) ermittelt wird.

3. Verfahren nach Anspruch 2,
**dadurch gekennzeichnet, dass** aus der Elektrodeneinbohrgeschwindigkeit (V) ein Schmelzgutzustand (Z) bestimmt und bei der Steuerung oder Regelung des Energieeintrags in den Elektrolichtbogenofen (2) berücksichtigt wird.

4. Verfahren nach Anspruch 3,
**dadurch gekennzeichnet, dass** der Schmelzgutzustand (Z) in einem Prozessmodell für eine Temperaturführung verwendet wird.

5. Verfahren nach einem der vorhergehenden Ansprüche,
**dadurch gekennzeichnet, dass** die Position des Elektrodentragarms mittels eines optischen, mechanischen oder magnetischen Verfahrens bestimmt wird.

6. Signalverarbeitungseinrichtung (18) für einen Elektrolichtbogenofen (2), mit einem maschinenlesbaren Programmcode (22), welcher Steuerbefehle aufweist, die die Signalverarbeitungseinrichtung (18) zur Durchführung eines Verfahrens nach einem der Ansprüche 1 bis 5 veranlassen.

7. Maschinenlesbarer Programmcode (22) für eine Signalverarbeitungseinrichtung (18) für einen Elektrolichtbogenofen (2), wobei der Programmcode Steuerbefehle aufweist, die die Signalverarbeitungseinrichtung (18) zur Durchführung des Verfahrens nach einem der Ansprüche 1 bis 5 veranlassen.

8. Speichermedium (20) mit einem darauf gespeicherten maschinenlesbaren Programmcode (22) gemäß Anspruch 7.

9. Elektrolichtbogenofen (2) mit einem Ofengefäß (10) und zumindest einer an einem Elektrodentragarm (6a, 6b, 6c) angeordneten Elektrode (4a, 4b, 4c) zum Erzeugen eines Lichtbogens zum Schmelzen eines Schmelzguts (8), insbesondere eines Schrotts, im Ofengefäß (10), mit Körperschallsensoren (12) zur Erfassung von Körperschall an einer Wand (14) des Ofengefäßes (10), mit einer Positionserfassungseinrichtung (16a, 16b, 16c) zum Erfassen der Position des Elektrodentragarms (6a, 6b, 6c), und mit einer Signalverarbeitungseinrichtung (18), wobei die Positionserfassungseinrichtung (16a, 16b, 16c) und die Körperschallsensoren (12) mit der Signalverarbeitungseinrichtung (18) wirkverbunden sind.
